(19) Europäisches Patentamt
European Patent Office
Office européen des brevets

(11) EP 1 912 272 A1

(12) # EUROPEAN PATENT APPLICATION
published in accordance with Art. 153(4) EPC

(43) Date of publication:
**16.04.2008 Bulletin 2008/16**

(21) Application number: **06768107.2**

(22) Date of filing: **11.07.2006**

(51) Int Cl.:
***H01M 8/02*** (2006.01) ***H01B 1/06*** (2006.01)
***H01B 13/00*** (2006.01) ***H01M 8/10*** (2006.01)

(86) International application number:
**PCT/JP2006/313794**

(87) International publication number:
**WO 2007/007767 (18.01.2007 Gazette 2007/03)**

(84) Designated Contracting States:
**DE FR GB IT**

(30) Priority: **12.07.2005 JP 2005203183**

(71) Applicant: **Asahi Glass Company, Limited**
**Chiyoda-ku**
**Tokyo 100-8405 (JP)**

(72) Inventors:
- **TAYANAGI, Jyunichi,**
**c/o Asahi Glass Company, Ltd.**
**Tokyo 1008405 (JP)**
- **ENDOH, Eiji,**
**c/o Asahi Glass Company, Limited,**
**Tokyo 1008405 (JP)**
- **KAWAZOE, Hisao,**
**c/o Asahi Glass Company, Limited,**
**Tokyo 1008405 (JP)**

(74) Representative: **Müller-Boré & Partner**
**Patentanwälte**
**Grafinger Strasse 2**
**81671 München (DE)**

(54) **ELECTROLYTE MEMBRANE FOR USE IN SOLID POLYMER-TYPE FUEL CELL, PROCESS FOR PRODUCTION OF THE MEMBRANE AND MEMBRANE ELECTRODE ASSEMBLY FOR USE IN SOLID POLYMER-TYPE FUEL CELL**

(57) To provide an electrolyte membrane for a polymer electrolyte fuel cell, capable of generating power in high energy efficiency, having high power generation performance regardless of the dew point of the feed gas and capable of generating stable power over a long period of time.

A membrane used as an electrolyte membrane for a polymer electrolyte fuel cell, which comprises a cation exchange membrane made of a fluorinated polymer having cation exchange groups and having an ion exchange capacity of from 1.0 to 2.5 meq/g dry polymer, wherein some of the cation exchange groups are ion-exchanged with at least one type of ions selected from the group consisting of cerium ions and manganese ions.

EP 1 912 272 A1

**Description**

TECHNICAL FIELD

The present invention relates to an electrolyte membrane for a polymer electrolyte fuel cell, whereby the initial output voltage is high, and the high output voltage can be obtained over a long period of time.

BACKGROUND ART

A fuel cell is a cell whereby a reaction energy of a gas as a feed material is converted directly to electric energy, and a hydrogen-oxygen fuel cell presents no substantial effect to the global environment since its reaction product is only water in principle. Especially, a polymer electrolyte fuel cell employing a polymer membrane as an electrolyte can be operated at room temperature to provide a high power density, as a polymer electrolyte membrane having high ion conductivity has been developed. Thus, the polymer electrolyte fuel cell is very much expected to be a prospective power source for mobile vehicles such as electric cars or for small cogeneration systems, along with an increasing social demand for an energy or global environmental problem in recent years.

In a polymer electrolyte fuel cell, a proton conductive ion exchange membrane is commonly employed as a polymer electrolyte, and an ion exchange membrane made of a perfluorocarbon polymer having sulfonic acid groups, is particularly excellent in the basic properties. In the polymer electrolyte fuel cell, gas diffusion type electrode layers are disposed on both sides of the ion exchange membrane, and power generation is carried out by supplying a gas containing hydrogen as a fuel and a gas (such as air) containing oxygen as an oxidizing agent to the anode and the cathode, respectively.

In the reduction reaction of oxygen at the cathode of the polymer electrolyte fuel cell, the reaction proceeds via hydrogen peroxide ($H_2O_2$), and it is concerned that the electrolyte membrane may be deteriorated by the hydrogen peroxide or peroxide radicals to be formed in the catalyst layer. Further, to the anode, oxygen molecules will come from the cathode through the membrane, and it is concerned that hydrogen peroxide or peroxide radicals may be formed at the anode too. Especially when a hydrocarbon membrane is used as the polymer electrolyte membrane, it is poor in the stability against radicals, which used to be a serious problem in operation for a long period of time.

For example, the first practical use of a polymer electrolyte fuel cell was when it was adopted as a power source for a Gemini ship in U.S.A., and at that time, a membrane consisting of sulfonated styrene/divinylbenzene polymer, was used as an electrolyte membrane, but it had a problem in the durability over a long period of time. As a technique to overcome such a problem, a method of having a compound with a phenolic hydroxyl group or a transition metal oxide capable of catalytically decomposing hydrogen peroxide added to the polymer electrolyte membrane (Patent Document 1) or a method of supporting catalytic metal particles in the polymer electrolyte membrane to decompose hydrogen peroxide (Patent Document 2) is also known. However, such a technique is a technique of decomposing formed hydrogen peroxide, and is not one attempted to suppress decomposition of the ion exchange membrane itself. Accordingly, although at the initial stage, the effect for improvement was observed, there was a possibility that a serious problem would result in the durability over a long period of time. Further, there was a problem that the cost tended to be high.

As opposed to such a hydrocarbon type polymer, an ion exchange membrane made of a perfluorocarbon polymer having sulfonic acid groups has been known as a polymer remarkably excellent in the stability against radicals. In recent years, a polymer electrolyte fuel cell employing an ion exchange membrane made of such a perfluorocarbon polymer is expected as a power source for e.g. automobiles or housing markets, and a demand for its practical use is increasing, and its developments are accelerated. In such applications, its operation with particularly high efficiency is required. Accordingly, its operation at higher voltage is desired, and at the same time, cost reduction is desired. Further, from the viewpoint of the efficiency of the entire fuel cell system, an operation under low or no humidification is required in many cases.

However, it has been reported that even with a fuel cell employing an ion exchange membrane made of a perfluorocarbon polymer having sulfonic acid groups, the stability is very high in operation under high humidification, but the voltage degradation is significant in operation under low or no humidification conditions (Non-Patent Document 1). Namely, it is considered that, also in the case of the ion exchange membrane made of a perfluorocarbon polymer having sulfonic acid groups, deterioration of the electrolyte membrane proceeds due to hydrogen peroxide or peroxide radicals in operation under low or no humidification.

Patent Document 1: JP-A-2001-118591
Patent Document 2: JP-A-6-103992
Non-patent Document 1: Summary of debrief session for polymer electrolyte fuel cells research and development achievement in 2000 sponsored by New Energy and Industrial Technology Development Organization, page 56, lines 16 to 24

## DISCLOSURE OF THE INVENTION

## OBJECT TO BE ACCOMPLISHED BY THE INVENTION

Accordingly, for the practical application of a polymer electrolyte fuel cell to e.g. vehicles or housing markets, it is an object of the present invention to provide a membrane for a polymer electrolyte fuel cell, whereby power generation with sufficiently high energy efficiency is possible and stable power generation is possible over a long period of time.

## MEANS TO ACCOMPLISH THE OBJECT

The present invention provides an electrolyte membrane for a polymer electrolyte fuel cell, which comprises a cation exchange membrane made of a fluorinated polymer having cation exchange groups and having an ion exchange capacity of from 1.0 to 2.5 meq/g dry polymer, wherein some of the cation exchange groups are ion-exchanged with at least one type of ions selected from the group consisting of cerium ions and manganese ions.
The electrolyte membrane of the present invention has an excellent resistance to hydrogen peroxide or peroxide radicals. The reason is unclear, but it is considered that the resistance of the electrolyte membrane against hydrogen peroxide or peroxide radicals will be effectively increased, as some of the cation exchange groups in the cation exchange membrane are ion-exchanged with cerium ions or manganese ions. Here, the ion exchange capacity of the cation exchange membrane is at least 1.0 meq/g dry polymer, whereby the electrolyte membrane is capable of achieving a remarkable conductivity of hydrogen ions even after some of cation exchange groups are ion-exchanged with cerium ions or manganese ions.
Further, the present invention provides a process for producing the above electrolyte membrane for a polymer electrolyte fuel cell, which comprises dissolving or dispersing a fluorinated polymer having cation exchange groups in a liquid, then mixing at least one type of ions selected from the group consisting of cerium ions or manganese ions thereto, and casting the obtained liquid to form an electrolyte membrane.
Further, the present invention provides a membrane-electrode assembly for a polymer electrolyte fuel cell, which comprises an anode and a cathode each having a catalyst layer containing a catalyst and an ion exchange resin, and an electrolyte membrane disposed between the anode and the cathode, wherein the electrolyte membrane is the above-mentioned electrolyte membrane.
Further, the present invention provides a membrane-electrode assembly for a polymer electrolyte fuel cell, which comprises an anode and a cathode each having the catalyst layer containing a catalyst and an ion exchange resin, and an electrolyte membrane disposed between the anode and the cathode, wherein the ion exchange resin contained in the catalyst layer of at least one of the anode and the cathode, comprises a fluorinated polymer having ion exchange groups and having an ion exchange capacity of from 1.0 to 2.5 meq/g dry polymer, and some of the cation exchange groups are ion-exchanged with at least one type of ions selected from the group consisting of cerium ions and manganese ions.

## EFFECTS OF THE INVENTION

Since the electrolyte membrane of the present invention has excellent resistance to hydrogen peroxide or peroxide radicals, a polymer electrolyte fuel cell provided with a membrane-electrode assembly having the electrolyte membrane of the present invention is excellent in durability and capable of generating the electric power stably over a long period of time.

## BEST MODE FOR CARRYING OUT THE INVENTION

The cation exchange membrane constituting the electrolyte membrane of the present invention, is made of a fluorinated polymer having cation exchange groups and has an ion exchange capacity of from 1.0 to 2.5 meq/g dry polymer. The cation exchange groups of the fluorinated polymer are not particularly limited, and they may specifically be sulfonic acid groups, sulfonimide groups, phosphonic acid groups or ketimide groups, and preferred are the sulfonic acid groups and sulfonimide groups having a particularly strong acidity and high chemical stability. Among them, the sulfonic acid groups are particularly preferred since the synthesis is simple.
The ion exchange capacity is from 1.0 to 2.5 meq/g dry polymer, preferably from 1.1 to 2.4 meq/g dry polymer, more preferably from 1.2 to 2.3 meq/g dry polymer, particularly preferably from 1.3 to 2.1 meq/g dry polymer. If the ion exchange capacity is less than 1.0 meq/g dry polymer, no adequate conductivity of hydrogen ions may be secured when the cation exchange groups are ion-exchanged with cerium ions or manganese ions, whereby the membrane resistance will increase to lower the power generation property. Further, if it is higher than 2.5 meq/g dry polymer, the water resistance and strength of the membrane may be lowered.

From a viewpoint of durability, the fluorinated polymer is preferably a perfluorocarbon polymer (which may contain an etheric oxygen atom). The perfluorocarbon polymer is not particularly limited, but it is preferably a copolymer, which comprises polymer units based on a tetrafluoroethylene and polymer units based on a perfluoro compound represented by $CF_2=CF-(OCF_2CFX)_m-O_p-(CF_2)_n-SO_3H$, wherein m is an integer of from 0 to 3, n is an integer of from 1 to 12, p is 0 or 1, and X is a fluorine atom or a trifluoromethyl group.

As preferred examples of the above perfluorocarbon compound, compounds represented by the following formulas (i) to (iii) may specifically be mentioned, wherein q is an integer of from 1 to 8, r is an integer of from 1 to 8, and t is an integer of from 1 to 3.

$$CF_2=CFO(CF_2)_q-SO_3H \qquad (i)$$

$$CF_2=CFOCF_2CF(CF_3)O(CF_2)_r-SO_3H \qquad (ii)$$

$$CF_2=CF-(OCF_2CF(CF_3))_tO(CF_2)_2-SO_3H \qquad (iii)$$

The perfluorocarbon polymer having sulfonic acid groups may be obtained by copolymerizing the above perfluoro compound wherein the $-SO_3H$ group is replaced by a $-SO_2F$ group, followed by hydrolysis and treatment for conversion to an acid form. One obtained by fluorination treatment after polymerization and thereby having terminals of the polymer fluorinated may be used. When the terminals of the polymer are fluorinated, stability against hydrogen peroxide and peroxide radicals will become higher, whereby the durability will be improved.

A polymer having sulfonimide groups is obtainable by converting the above perfluoro compound wherein the $-SO_3H$ group is replaced by a $-SO_2F$ group, to a sulfonimide group by a known method, followed by polymerization. Otherwise, the above perfluoro compound wherein the $-SO_3H$ group is replaced by a $-SO_2F$ groups, is polymerized, and if necessary, fluorination of the terminals of the polymer is carried out to obtain a polymer having the- $SO_2F$ groups, and then the $-SO_2F$ groups may be converted to sulfonimide groups by a known method.

The molecular weight of the fluorinated polymer is not particularly limited, but for example, it is preferably from 150,000 to 3,000,000 by weight-average molecular weight as measured by Gel Permeation Chromatography (hereinafter referred to as GPC). If the molecular weight is too low, the fluorinated polymer of the present invention may have a poor water resistance because it has a high content of hydrophilic cation exchange groups. Further, if the molecular weight is too high, the moldability, film-forming property and solubility may be poor. Particularly preferably, it is from 200,000 to 1,000,000, more preferably from 300,000 to 1,000,000 by weight-average molecular weight.

Further, if the solubility of the fluorinated polymer is low and GPC measurement is difficult, it is possible to measure the melt flowability. For example, in the case of the fluorinated polymer having sulfonic acid groups, the fluorinated polymer having $SO_2F$ groups as its precursor is melt-extruded from a nozzle having a length of 1 mm and an inner diameter of 1 mm under a pressure of 2.94 MPa by using a flow tester (CFT-500D manufactured by Shimadzu Corporation), whereby the temperature at which the flow rate becomes 100 mm/sec may be used as an index. The temperature is preferably from 170 to 400°C, more preferably from 180 to 350°C, particularly preferably from 200 to 350°C, further preferably from 220 to 330°C.

The method of incorporating at least one type of ions selected from the group consisting of cerium ions and manganese ions (hereinafter referred to as cerium ions, etc.) into the fluorinated polymer having cation exchange groups to obtain the electrolyte membrane of the present invention, is not particularly limited, and the following methods may, for example, be mentioned. (1) A method of dissolving or dispersing a fluorinated polymer having cation exchange groups in a liquid, then mixing at least one type of ions selected from the group consisting of cerium ions, etc. thereto, and casting the obtained liquid to form an electrolyte membrane. (2) A method of immersing a membrane made of a fluorinated polymer having cation exchange groups in a solution containing cerium ions, etc. (3) A method of bringing an organic metal complex salt of cerium ions into contact with a cation exchange membrane made of a fluorinated polymer having cation exchange groups to incorporate cerium ions, etc. The above method (1) is preferred because a homogeneous membrane may be obtained, its process is the simplest and it has an excellent mass productivity.

Here, in the case of the cerium ions, the valence may be trivalent or tetravalent, and a cerium compound that is soluble in a liquid medium (for example, water or an alcohol) is used to obtain a solution containing cerium ions. Specific examples of a salt containing a trivalent cerium ion include cerium(III) carbonate ($Ce_2(CO_3)_3 \cdot 8H_2O$), cerium (III) acetate ($Ce(CH_3COO)_3 \cdot H_2O$), cerium (III) chloride ($CeCl_3 \cdot 6H_2O$), cerium (III) nitrate ($Ce(NO_3)_3 \cdot 6H_2O$) and cerium (III) sulfate ($Ce_2(SO_4)_3 \cdot 8H_2O$). Specific examples of a salt containing a tetravalent cerium ion include cerium(IV) sulfate ($Ce(SO_4)_2 \cdot 4H_2O$), cerium(IV) diammonium nitrate ($Ce(NH_4)_2(NO_3)_6$) and cerium(IV) tetraamonium sulfate ($Ce(NH_4)_4(SO_4)_4 \cdot 4H_2O$). In addition, examples of an organic metal complex salt of cerium ions include cerium(III) acetylacetonate ($Ce(CH_3COCHCOCH_3)_3 \cdot 3H_2O$).

Further, in the case of the manganese ions, the valence may be divalent or trivalent, and a manganese compound that is soluble in an aqueous medium is used to obtain a solution containing manganese ions. Specific examples of a

salt containing a divalent manganese ion include manganese(II) acetate ($Mn(CH_3COO)_2 \cdot 4H_2O$), manganese(II) chloride ($MnCl_2 \cdot 4H_2O$), manganese(II) nitrate ($Mn(NO_3)_2 \cdot 6H_2O$), manganese (II) sulfate ($MnSO_4 \cdot 5H_2O$) and manganese (II) carbonate ($MnCO_3 \cdot nH_2O$). A specific example of a salt containing a trivalent manganese ion is manganese(III) acetate ($Mn(CH_3COO)_3 \cdot 2H_2O$). In addition, examples of an organic metal complex salt of manganese include manganese(II) acetylacetonate ($Mn(CH_3COCHCOCH_3)_2$).

Among the above compounds, in a case of forming an electrolyte membrane by the above method (1), cerium or manganese carbonate is preferred as the cerium or manganese compound, which is respectively soluble in a dispersion of the fluorinated polymer. The cerium or manganese carbonate is preferred because it dissolves in the dispersion of the fluorinated polymer to form cerium ions, etc., and at the same time the carbonate portion can be eliminated as gas. Further, in the case of forming an electrolyte membrane by the above method (2), it is preferred to use an aqueous solution of cerium nitrate, cerium sulfate, manganese nitrate or manganese sulfate because it is easy to handle. Nitric acid or sulfuric acid which is formed when the fluorinated polymer having cation exchange groups is ion-exchanged with such an aqueous solution, easily dissolves in the aqueous solution and can be eliminated.

In a case where cerium ions are trivalent, for example, when sulfonic acid groups are ion-exchanged with cerium ions, $Ce^{3+}$ is bonded to three $-SO_3^-$, as shown below.

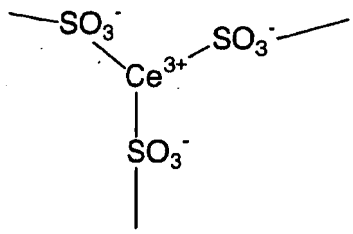

When cation exchange groups of the fluorinated polymer are sulfonic acid groups, the number of cerium ions contained in the electrolyte membrane is preferably from 0.3 to 20 mol% of $-SO_3^-$ groups in the membrane (hereinafter this ratio will be referred to as the "content of cerium ions"). In a case where cerium ions completely take the above structure, sulfonic acid groups ion-exchanged with cerium ions are from 0.9 to 60 mol% of the total amount of sulfonic acid groups and the sulfonic acid groups ion-exchanged with cerium ions. The content of cerium ions is more preferably from 0.7 to 16 mol%, further preferably from 1 to 13 mol%.

If the content of cerium ions is lower than this range, no adequate stability against hydrogen peroxide or peroxide radicals may be secured. On the other hand, if the content of cerium ions is higher than this range, no adequate conductivity of hydrogen ions may be secured, whereby the membrane resistance may increase to lower the power generation property.

Further, in a case where manganese ions are divalent, when sulfonic acid groups are ion-exchanged with manganese ions, two protons are replaced by one manganese ion and $Mn^{2+}$ is bonded to two $-SO_3^-$.

When cation exchange groups of the fluorinated polymer are sulfonic acid groups, the number of manganese ions contained in the electrolyte membrane is preferably from 0.5 to 30 mol% of $-SO_3^-$ groups in the membrane (hereinafter this ratio will be referred to as the "content of manganese ions"). In a case where a manganese ion is completely bonded to two $-SO_3^-$ groups, sulfonic acid groups ion-exchanged with manganese ions are from 1.0 to 60 mol% of the total amount of sulfonic acid groups and the sulfonic acid groups ion-exchanged with manganese ions. The content of manganese ions is more preferably from 1 to 25 mol%, further preferably from 1.5 to 20 mol%.

If the content of manganese ions is lower than this range, no adequate stability against hydrogen peroxide or peroxide radicals may be secured. On the other hand, if the content of manganese ions is higher than this range, no adequate conductivity of hydrogen ions may be secured, whereby the membrane resistance may increase to lower the power generation property.

With the electrolyte membrane of the present invention, the value obtained from the following formula

(1) is preferably at least 0.9 mmol/g in order to achieve a long term generation performance having enough conductivity of hydrogen ions even after cation exchange groups are ion-exchanged with cerium ions, etc.

$$(m-3x-2y) \div (\text{mass of cation exchange membrane}) \quad (1)$$

wherein m is the ion exchange capacity (equivalent amount) before the ion exchange of the cation exchange membrane, x is the molar amount of cerium atoms contained in the cation exchange membrane, and y is the molar amount of manganese atoms contained in the cation exchange membrane.

The value obtained from the above formula (1) is preferably at least 1.0 mmol/g, more preferably at least 1.1 mmol/g.

The electrolyte membrane of the present invention may be a membrane made of only a fluorinated polymer having cation exchange groups, some of which are replaced by cerium ions, etc., but it may contain another component. It may also be a membrane reinforced by e.g. fibers, woven cloth, non-woven cloth or a porous material of another resin such as a polytetrafluoroethylene or perfluoroalkyl ether.

The polymer electrolyte fuel cell provided with the electrolyte membrane of the present invention has, for example, the following structure. Namely, the cell is provided with membrane-electrode assemblies, each of which comprises an anode and a cathode each having a catalyst layer containing a catalyst and an ion exchange resin, disposed on both sides of the electrolyte membrane. The anode and the cathode of the membrane-electrode assembly preferably have a gas diffusion layer made of carbon cloth, carbon paper or the like, disposed outside the catalyst layer (opposite to the membrane). Separators having grooves formed to constitute flow paths for a fuel gas or an oxidizing agent gas, are disposed on both sides of each membrane-electrode assembly, and a plurality of membrane-electrode assemblies are stacked with the separators to form a stack, and a hydrogen gas is supplied to the anode side and an oxygen gas or air to the cathode side. A reaction of $H_2 \rightarrow 2H^+ + H_2O$ takes place on the anodes, and a reaction of $1/2O_2 + 2H^+ + 2e^- \rightarrow H_2O$ on the cathodes, whereby chemical energy is converted to electric energy.

Furthermore, the electrolyte membrane of the present invention is also applicable to direct methanol fuel cells in which methanol is supplied instead of the fuel gas to the anode side.

The membrane-electrode assembly may be obtained in accordance with conventional methods, for example, as follows. First, a conductive carbon black powder supporting particles of a platinum catalyst or a platinum alloy catalyst, is mixed with a solution of an ion exchange resin to obtain a uniform dispersion, and gas diffusion electrodes are formed, for example, by any one of the following methods, thereby to obtain a membrane-electrode assembly.

The first method is a method of coating both sides of the electrolyte membrane with the above-mentioned dispersion, drying it, and then attaching two sheets of carbon cloth or carbon paper closely onto both sides. The second method is a method of applying the above-mentioned dispersion liquid onto two sheets of carbon cloth or carbon paper, drying it, and then placing the two sheets on both sides of the above electrolyte membrane so that the sides coated with the dispersion are closely in contact with the electrolyte membrane. Here, the carbon cloth or carbon paper functions as gas diffusion layers to more uniformly diffuse the gas to the catalyst-containing layers, and functions as current collectors. Furthermore, another available method is such that substrates separately prepared are coated with the above-mentioned dispersion liquid to make catalyst layers. Such catalyst layers are bonded to an electrolyte membrane by a method such as a decal method, then the substrates are peeled off, and the electrolyte membrane is sandwiched between the above-mentioned gas diffusion layers.

There are no particular restrictions on the ion-exchange resin contained in the catalyst layer. However, it is preferably a fluorinated polymer having cation exchange groups having an ion exchange capacity of from 1.0 to 2.5 meq/g dry polymer, particularly preferably a perfluorinated carbon polymer having sulfonic acid groups, like the fluorinated polymer having cation exchange groups, which constitutes the electrolyte membrane of the present invention. In the catalyst layer, like in the electrolyte membrane of the present invention, some of the cation exchange groups may be ion-exchanged with at least one type of ions selected from the group consisting of cerium ions and manganese ions. In this catalyst layer, decomposition of the ion exchange resin is effectively prevented, and a polymer electrolyte fuel cell will be provided with more durability. Further, it is also possible that as an electrolyte membrane, an ion exchange resin which does not contain at least one type of ions selected from the group consisting of cerium ions and manganese ions, is used, while only the catalyst layer contains at least one type of ions selected from the group consisting of cerium ions and manganese ions.

In a case where some of cation exchange groups of an ion exchange resin in the catalyst layer are to be ion exchanged with cerium ions, etc., cerium carbonate or manganese carbonate is added to the dispersion of the fluorinated polymer having cation exchange groups to ion exchange some of the cation exchange groups with cerium ions or manganese ions, and then a catalyst is dispersed in the obtained liquid to form as a coating liquid, which is then formed into catalyst layers in the same manner as mentioned above. In this case, it is possible to form either cathode or anode by using the dispersion having cerium ions, etc., and it is also possible to form both cathode and anode by using the dispersion having cerium ions, etc.

## EXAMPLES

Now, the present invention will be described in further detail with reference to Examples (Examples 1 to 6) and Comparative Examples (Examples 7 to 13). However, it should be understood that the present invention is by no

means.restricted to such specific Examples.

EXAMPLE 1

300 g of a $CF_2=CF_2/CF_2=CFOCF_2CF(CF_3)O(CF_2)_2SO_3H$ copolymer (ion exchange capacity: 1.1meq/g dry polymer, hereinafter referred to as polymer A), 420 g of ethanol and 280 g of water were charged into a 2 L autoclave, sealed hermetically and mixed at 105°C for 6 hours by means of a double helical blade to obtain a uniform liquid (hereinafter referred to as "liquid A"). The solid content concentration of the liquid A was 30 mass%.

100 g of the liquid A and 0.5 g of cerium carbonate hydrate ($Ce_2(CO_3)_3 \cdot 8H_2O$) were charged into a 300 mL roundbottomed flask made of glass and stirred at a room temperature for 8 hours by a meniscus blade made of PTFE (polytetrafluoroethylene). Bubbles due to generation of $CO_2$ were generated from the start of stirring, and a uniform transparent liquid composition was finally obtained. The solid content concentration of the obtained liquid composition was 30.1 mass%. The composition was applied to a 100 μm ETFE (ethylenetetrafluoroethylene) sheet (AFLEX100N, trade name, manufactured by Asahi Glass Company, Limited) by cast coating with a die coater, preliminarily dried at 80°C for 10 minutes and dried at 120°C for 10 minutes and further annealed at 150°C for 30 minutes to obtain an electrolyte membrane having a thickness of 50 μm.

From this electrolyte membrane, a membrane having a size of 5 cm x 5 cm was cut out and left to stand in dry nitrogen for 16 hours, and its mass was measured. Then, it was immersed in a 0.1 mol/L hydrochloric acid aqueous solution to obtain a liquid, into which cerium ions were completely extracted. This liquid was subjected to inductively-coupled plasma (ICP) emission spectrometry to quantitatively determine cerium ions in the electrolyte membrane. As a result, the content of cerium ions was 5 mol%.

Then, 5.1 g of distilled water was mixed with 1.0 g of a catalyst powder (manufactured by N.E. CHEMCAT CORPORATION) in which platinum was supported on a carbon carrier (specific surface area: 800 $m^2/g$) so as to be contained in an amount of 50% of the whole mass of the catalyst. With this liquid mixture, 4.5 g of a liquid having a $CF_2=CF_2/CF_2=CFOCF_2CF(CF_3)O(CF_2)_2SO_3H$ copolymer (ion exchange capacity: 1.1 meq/g dry polymer) dispersed in ethanol and having a solid content concentration of 9 mass% was mixed. This mixture was homogenized by using a homogenizer (Polytron, trade name, manufactured by Kinematica Company) to obtain a coating fluid for forming a catalyst layer.

This coating fluid was applied by a bar coater on a substrate film made of polypropylene and then dried for 30 minutes in a dryer at 80°C to obtain each of an anode catalyst layer and a cathode catalyst layer. Here, the mass of the substrate film alone before formation of the catalyst layer and the mass of the substrate film after formation of the catalyst layer were measured to determine the amount of platinum per unit area contained in the catalyst layer, whereby in the anode layer, it was 0.2 $mg/cm^2$ and in the cathode layer, it was 0.4 $mg/cm^2$.

Then, using the above ion-exchange membrane having cerium ions incorporated, catalyst layers formed on the substrate film were disposed on both sides of the membrane and decaled by hot press method to obtain a membrane-catalyst layer assembly having an anode catalyst layer and a cathode catalyst layer bonded to both sides of the ion exchange membrane. The electrode area was 16 $cm^2$.

This membrane-catalyst layer assembly was laid between two gas diffusion layers made of carbon cloth having a thickness of 350 μm to prepare a membrane-electrode assembly, and the initial property evaluation under operation conditions under low humidification was carried out. The test conditions were as follows. Hydrogen (utilization ratio: 70%)/air (utilization ratio: 50%) was supplied under ordinary pressure at a cell temperature at 80°C and at a current density of 0.2 $A/cm^2$. Hydrogen and air were so humidified and supplied into the cell that the dew point on the anode side was 64°C and that the dew point on the cathode side was 64°C, respectively, whereby the cell voltage at the initial stage of the operation was measured. The results are shown in Table 1.

Further, an open circuit voltage test (OCV test) was carried out as an accelerated test. In the test, hydrogen (utilization ratio: 70%) and air (utilization ratio: 40%) corresponding to a current density of 0.2 $A/cm^2$ were supplied under ordinary pressure to the anode and to the cathode, respectively, the cell temperature was set at 90°C, the dew point of the anode gas was set at 60°C and the dew point of the cathode gas was set at 60°C, the cell was operated for 100 hours in an open circuit state without generation of electric power, and the voltage change was measured during the period. The results are also shown in Table 1.

EXAMPLE 2

300 g of a $CF_2=CF_2/CF_2=CFOCF_2CF(CF_3)O(CF_2)_2SO_3H$ copolymer (ion exchange capacity: 1.24 meq/g dry polymer), 420 g of ethanol and 280 g of water were charged into a 2 L autoclave, sealed hermetically and mixed at 105°C for 6 hours by means of a double helical blade to obtain a uniform liquid (hereinafter referred to as "liquid B"). The solid content concentration of the liquid B was 30 mass%.

100 g of the liquid B and 0.5 g of cerium carbonate hydrate ($Ce_2(CO_3)_3 \cdot 8H_2O$) were charged into a 300 mL

roundbottomed flask made of glass and stirred at a room temperature for 8 hours by a meniscus blade made of PTFE. Bubbles due to generation of $CO_2$ were generated from the start of stirring, and a uniform transparent liquid composition was finally obtained. The solid content concentration of the obtained liquid composition was 30.1 mass%. The composition was applied to a 100 μm ETFE sheet by cast coating with a die coater, preliminarily dried at 80°C for 10 minutes and dried at 120°C for 10 minutes and further annealed at 150°C for 30 minutes to obtain an electrolyte membrane having a thickness of 50 μm.

From this electrolyte membrane, a membrane having a size of 5 cm x 5 cm was cut out and left to stand in dry nitrogen for 16 hours, and its mass was measured. Then, it was immersed in a 0.1 mol/L hydrochloric acid aqueous solution to obtain a liquid into which cerium ions were completely extracted. This liquid was subjected to ICP emission spectrometry to quantitatively determine cerium ions in the electrolyte membrane. As a result, the content of cerium ions was 4.44 mol%.

Then, by using the membrane, a membrane-catalyst layer assembly was obtained and a membrane-electrode assembly was further obtained in the same manner as in Example 1. When the membrane-electrode assembly was evaluated in the same manner as in Example 1, the results as shown in Table 1 were obtained.

EXAMPLE 3 (COMPARATIVE EXAMPLE)

Without adding any substance to the liquid A, an electrolyte membrane was obtained by cast coating. Except for using this electrolyte membrane, a membrane-catalyst layer assembly was obtained and a membrane-electrode assembly was further obtained in the same manner of Example 1. When the membrane-electrode assembly was evaluated in the same manner as in Example 1, the results as shown in Table 1 were obtained.

TABLE 1

| | Output voltage of operation under low humidification (V) | Open circuit voltage (V) | |
|---|---|---|---|
| | Initial | Initial | After 100 hours |
| Ex. 1 | 0.72 | 0.97 | 0.94 |
| Ex. 2 | 0.75 | 0.98 | 0.95 |
| Ex. 3 | 0.76 | 0.96 | 0.75 |

EXAMPLE 4 (COMPARATIVE EXAMPLE)

By using the liquid A, which was used in Example 1, an electrolyte membrane having a thickness of 50 μm was obtained in the same manner as Example 1 except that cerium ions were not contained.

EXAMPLE 5

An electrolyte membrane having a thickness of 50 μm and containing 5 mol% of cerium ions was obtained in the same manner as Example 1.

EXAMPLE 6 (COMPARATIVE EXAMPLES)

300 g of a $CF_2=CF_2/CF_2=CFOCF_2CF(CF_3)O(CF_2)_2SO_3H$ copolymer (ion exchange capacity: 1.33 meq/g dry polymer), 420 g of ethanol and 280 g of water were charged into a 2 L autoclave, sealed hermetically and mixed at 105°C for 6 hours by means of a double helical blade to obtain a uniform liquid (hereinafter referred to as "liquid C"). The solid content concentration of the liquid C was 30 mass%.

By using the liquid C, an electrolyte membrane having a thickness of 50 μm was obtained in the same manner as in Example 1 except that cerium ions were not contained.

EXAMPLE 7

100 g of the liquid C and 0.6 g of cerium carbonate hydrate ($Ce_2(CO_3)_3 \cdot 8H_2O$) were charged into a 300 mL roundbottomed flask made of glass and stirred at room temperature for 8 hours by a meniscus blade made of PTFE. Bubbles due to generation of $CO_2$ were generated from the start of stirring, and a uniform transparent liquid composition was finally obtained. The solid content concentration of the obtained liquid composition was 30.1 mass%. The composition was applied to a 100 μm ETFE sheet by cast coating with a die coater, preliminarily dried at 80°C for 10 minutes and

dried at 120°C for 10 minutes and further annealed at 150°C for 30 minutes to obtain an electrolyte membrane having a thickness of 50 μm.

From this electrolyte membrane, a membrane having a size of 5 cm x 5 cm was cut out and left to stand in dry nitrogen for 16 hours, and its mass was measured. Then, it was immersed in a 0.1 mol/L hydrochloric acid aqueous solution to obtain a liquid, into which cerium ions were completely extracted. This liquid was subjected to ICP emission spectrometry to quantitatively determine cerium ions in the electrolyte membrane. As a result, the content of cerium ions was 5 mol%.

EXAMPLE 8 (COMPARATIVE EXAMPLE)

5 g of a $CF_2=CF_2/CF_2=CFOCF_2CF (CF_3) O (CF_2)_2SO_3H$ copolymer (ion exchange capacity: 0.91meq/g dry polymer), 57g of ethanol and 38 g of water were charged into a 0.2 L autoclave, sealed hermetically and mixed at 105°C for 6 hours by means of a double helical blade to obtain a uniform liquid (hereinafter referred to as "liquid D"). The solid content concentration of the liquid D was 5 mass%.

The liquid D was casted on the glass petri dish, preliminarily dried at 80°C for 10 minutes and dried at 120°C for 10 minutes, and further annealed at 150°C for 30 minutes to obtain an electrolyte membrane having a thickness of 40 μm.

EXAMPLE 9 (COMPARATIVE EXAMPLE)

100 g of the liquid D and 69 mg of cerium carbonate hydrate ($Ce_2(CO_3)_3 \cdot 8H_2O$) were charged into a 300 mL roundbottomed flask made of glass and stirred at a room temperature for 8 hours by a meniscus blade made of PTFE. Bubbles due to generation of $CO_2$ were generated from the start of stirring, and a uniform transparent liquid composition was finally obtained. The solid content concentration of the obtained liquid composition was 5.0 mass%. The composition was casted on the glass petri dish, preliminarily dried at 80°C for 10 minutes and dried at 120°C for 10 minutes and further annealed at 150°C for 30 minutes to obtain an electrolyte membrane having a thickness of 40 μm.

From this electrolyte membrane, a membrane having a size of 5 cm x 5 cm was cut out and left to stand in dry nitrogen for 16 hours, and its mass was measured. Then, it was immersed in a 0.1 mol/L hydrochloric acid aqueous solution to obtain a liquid, into which cerium ions were completely extracted. This liquid was subjected to ICP emission spectrometry to quantitatively determine cerium ions in the electrolyte membrane. As a result, the content of cerium ions was 5 mol%.

MEASUREMENT of RESISTIVITY

With respect to the 6 types of membranes obtained in Examples 4 to 9, AC resistivity of each electrolyte membrane was measured at 80°C under a relative humidity of 95% in accordance with Electrochimca. Acta., 43, 24, 3749-3754 (1998). The results are shown in the Table 2. Further, in Table 2, the ion-exchange capacity (AR) of a fluorinated polymer constituting the electrolyte membrane and the content of Ce ions in the electrolyte membrane, are described.

TABLE 2

| | AR of fluorinated polymer (meq/g dry polymer) | Content of Ce ions (mol%) | Resistivity (Ωcm) |
|---|---|---|---|
| Ex. 4 | 1.1 | 0 | 3.6 |
| Ex. 5 | 1.1 | 5 | 5.2 |
| Ex. 6 | 1.33 | 0 | 2.3 |
| Ex. 7 | 1.33 | 5 | 3.5 |
| Ex. 8 | 0.91 | 0 | 5.5 |
| Ex. 9 | 0.91 | 5 | 7.9 |

EXAMPLE 10

As in Example 1, a membrane having a manganese content of 10% was obtained in the same manner as Example 1 except for using 422 mg of manganese carbonate hydrate ($MnCO_3 \cdot nH_2O$, the content of manganese was from 41 to 46% of the total mass) instead of cerium carbonate hydrate. Then, by using the membrane, a membrane-catalyst layer assembly was obtained and a membrane-electrode assembly was further obtained in the same manner as in Example 1. When the membrane-electrode assembly was evaluated in the same manner as in Example 1, the results as shown in Table 3 were obtained.

EXAMPLE 11

As in Example 10, a membrane having 8.87% of manganese content was obtained in the same manner as Example 10 except for using a $CF_2=CF_2/CF_2=CFOCF_2CF(CF_3)O(CF_2)_2SO_3H$ copolymer having an ion exchange capacity of 1.24 meq/g dry polymer instead of the polymer A. Then, by using the membrane, a membrane-catalyst layer assembly was obtained and a membrane-electrode assembly was further obtained in the same manner of Example 1. When the membrane-electrode assembly was evaluated in the same manner as in Example 1, the results as shown in Table 3 were obtained.

EXAMPLE 12

As in Example 10, the membrane having 8.27% of manganese content was obtained in the same manner as Example 10 other than using a $CF_2=CF_2/CF_2=CFOCF_2CF(CF_3)O(CF_2)_2SO_3H$ copolymer having an ion exchange capacity of 1.33 meq/g dry polymer instead of the polymer A. Then, by using the membrane, a membrane-catalyst layer assembly was obtained and a membrane-electrode assembly was further obtained in the same manner of Example 1. When the membrane-electrode assembly was evaluated in the same manner as in Example 1, the results as shown in Table 3 were obtained.

EXAMPLE 13

The membrane having a cerium ion content of 5 mol% was obtained by using the same $CF_2=CF_2/CF_2=CFOCF_2CF(CF_3)O(CF_2)_2SO_3H$ copolymer (ion exchange capacity: 1.33meq/g dry polymer) as used in Example 12, and adding 0.6 g of cerium carbonate hydrate ($Ce_2(CO_3)_3 \cdot 8H_2O$). Then, by using the membrane, a membrane-catalyst layer assembly was obtained and a membrane-electrode assembly was further obtained in the same manner of Example 1. When the membrane-electrode assembly was evaluated in the same manner as in Example 1, the following results were obtained.

TABLE 3

| | Output voltage of operation under low humidification (V) | Open circuit voltage (V) | |
|---|---|---|---|
| | Initial | Initial | After 100 hours |
| Ex. 10 | 0.73 | 0.98 | 0.95 |
| Ex. 11 | 0.74 | 0.97 | 0.94 |
| Ex. 12 | 0.75 | 0.96 | 0.93 |
| Ex. 13 | 0.76 | 0.98 | 0.96 |

By having cerium ions, the electrolyte membrane of the present invention can achieve a high power generation property and will also have an excellent durability. The electrolyte membrane of the present invention can develop the high power generation property because it is made of a cation exchange membrane having a relatively high ion-exchange capacity, and the resistivity will stay low even after ion-exchanged with cerium ions.

INDUSTRIAL APPLICABILITY

The electrolyte membrane of the present invention is excellent in durability against hydrogen peroxide or peroxide radicals formed by power generation of a fuel cell. Accordingly, a polymer electrolyte fuel cell provided with a membrane-electrode assembly having the electrolyte membrane has durability over a long period of time in power generation under low humidification.

The entire disclosure of Japanese Patent Application No. 2005-203183 filed on July 12, 2005 including specification, claims, drawings and summary is incorporated herein by reference in its entirety.

**Claims**

1. An electrolyte membrane for a polymer electrolyte fuel cell, which comprises a cation exchange membrane made of a fluorinated polymer having cation exchange groups and having an ion exchange capacity of from 1.0 to 2.5 meq/g dry polymer, wherein some of the cation exchange groups are ion-exchanged with at least one type of ions selected from the group consisting of cerium ions and manganese ions.

2. The electrolyte membrane for a polymer electrolyte fuel cell according to Claim 1, wherein the value obtained from the following formula (1) is at least 0.9 meq/g dry polymer.
(m-3x-2y)÷(mass of cation exchange membrane) (1) wherein m is the ion exchange capacity (equivalent amount) of the cation exchange membrane, x is the molar amount of cerium atoms contained in the cation exchange membrane and y is the molar amount of manganese atoms contained in the cation exchange membrane.

3. The electrolyte membrane for a polymer electrolyte fuel cell according to Claim 1 or 2, wherein the fluorinated polymer comprises a perfluorocarbon polymer having cation exchange groups.

4. The electrolyte membrane for a polymer electrolyte fuel cell according to any one of Claims 1 to 3, wherein the cation exchange groups are sulfonic acid groups.

5. The electrolyte membrane for a polymer electrolyte fuel cell according to Claim 4, wherein cerium ions are contained in an amount of from 0.3 to 20 mol% of $SO_3^-$ groups which are contained in the cation exchange membrane.

6. The electrolyte membrane for a polymer electrolyte fuel cell according to Claim 4, wherein manganese ions are contained in an amount of from 0.5 to 30 mol% of $SO_3^-$ groups which are contained in the cation exchange membrane.

7. The electrolyte membrane for a polymer electrolyte fuel cell according to any one of Claims 4 to 6, wherein the fluorinated polymer is a copolymer comprising repeating units based on tetrafluoroethylene and repeating units based on a perfluoro compound represented by $CF_2=CF-(OCF_2CFX)_m-O_p-(CF_2)_n-SO_3H$, wherein X is a fluorine atom or a trifluoromethyl group, m is an integer of from 0 to 3, n is an integer of from 1 to 12, and p is 0 or 1.

8. A process for producing the electrolyte membrane for a polymer electrolyte fuel cell according to any one of Claims 1 to 6, which comprises dissolving or dispersing a fluorinated polymer having cation exchange groups in a liquid, then mixing at least one type of ions selected from the group consisting of cerium ions and manganese ions thereto, and casting the obtained liquid to form an electrolyte membrane.

9. A membrane-electrode assembly for a polymer electrolyte fuel cell, which comprises an anode and a cathode each having a catalyst layer containing a catalyst and an ion exchange resin, and an electrolyte membrane disposed between the anode and the cathode, wherein the electrolyte membrane is the electrolyte membrane as defined in any one of Claims 1 to 7.

10. A membrane-electrode assembly for a polymer electrolyte fuel cell, which comprises an anode and a cathode each having the catalyst layer containing a catalyst and an ion exchange resin, and an electrolyte membrane disposed between the anode and the cathode, wherein the ion exchange resin contained in the catalyst layer of at least one of the anode and the cathode, comprises a fluorinated polymer having an ion exchange groups and an ion exchange capacity of from 1.0 to 2.5 meq/g dry polymer, and some of the cation exchange groups are ion-exchanged with at least one type of ions selected from the group consisting of cerium ions and manganese ions.

**INTERNATIONAL SEARCH REPORT**

International application No.
PCT/JP2006/313794

A. CLASSIFICATION OF SUBJECT MATTER
*H01M8/02*(2006.01)i, *H01B1/06*(2006.01)i, *H01B13/00*(2006.01)i, *H01M8/10* (2006.01)i

According to International Patent Classification (IPC) or to both national classification and IPC

B. FIELDS SEARCHED

Minimum documentation searched (classification system followed by classification symbols)
H01M8/02, H01B1/06, H01B13/00, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-93233 A (Toyota Central Research And Development Laboratories, Inc.), 07 April, 2005 (07.04.05), (Family: none) | 1-10 |
| A | JP 2005-71760 A (Toyota Central Research And Development Laboratories, Inc.), 17 March, 2005 (17.03.05), & WO 2005/020357 A1 | 1-10 |
| A | JP 2005-19232 A (Toyota Central Research And Development Laboratories, Inc.), 20 January, 2005 (20.01.05), (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
04 October, 2006 (04.10.06)

Date of mailing of the international search report
10 October, 2006 (10.10.06)

Name and mailing address of the ISA/
Japanese Patent Office

Facsimile No.

Authorized officer

Telephone No.

Form PCT/ISA/210 (second sheet) (April 2005)

**INTERNATIONAL SEARCH REPORT**

International application No.
PCT/JP2006/313794

C (Continuation). DOCUMENTS CONSIDERED TO BE RELEVANT

| Category* | Citation of document, with indication, where appropriate, of the relevant passages | Relevant to claim No. |
|---|---|---|
| A | WO 2004/102714 A1 (Asahi Glass Co., Ltd.), 25 November, 2004 (25.11.04), & US 2006/63903 A1 & EP 1635412 A1 | 1-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001118591 A
- JP 6103992 A
- JP 2005203183 A


### Non-patent literature cited in the description


- Summary of debrief session for polymer electrolyte fuel cells research and development achievement. *New Energy and Industrial Technology Development Organization,* 2000, 56
- *Electrochimca. Acta.,* 1998, vol. 43 (24), 3749-3754